# FASCICULE DE BREVET EUROPEEN

(11) **EP 0 655 319 B1**
(45) Date de publication et mention de la délivrance du brevet: **11.06.1997**
(21) Numéro de dépôt: 94117655.4
(22) Date de dépôt: 09.11.1994
(51) Int. Cl.: B29C 70/46, B29B 11/16, B29C 69/02

(54) **Procédé de fabrication de pièces composites par moulage par compression**
Verfahren zur Herstellung von formgepressten Verbundstoffteilen
Method for manufacturing compression moulded composite pieces

(30) Priorité: 22.11.1993 FR 9314032
(43) Date de publication de la demande: 31.05.1995
(73) Titulaire: COMPAGNIE GENERALE DES ETABLISSEMENTS MICHELIN - MICHELIN & CIE, 63040 Clermont-Ferrand Cédex (FR)
(72) Inventeur: Finck, Francois, F-88000 Deyvillers (FR); Follanfant, Jacques, F-63000 Clermont-Ferrand (FR); Vernet, Yves, F-63800 Cournon-d'Auvergne (FR)
(74) Mandataire: Bauvir, Jacques

(56) Documents cités:
- DE-B- 1 235 561
- US-A- 4 302 499
- US-A- 5 141 689
- DATABASE WPI Week 8822, Derwent Publications Ltd., London, GB; AN 88-151541 & JP-A-63 092 632 (SHOWA HIGH POLYMER) 23 Avril 1988
- DATABASE WPI Week 8743, Derwent Publications Ltd., London, GB; AN 87-304356 & JP-A-62 215 622 (SHOWA HIGH POLYMER)

## Description

L'invention concerne les procédés de fabrication de pièces composites, notamment dans le cas de pièces de formes complexes et de structure.

Une première technique de fabrication de pièces composites consiste à utiliser un procédé par moulage par compression. Ces procédés de fabrication de pièces composites par moulage par compression consistent à forcer une pâte composée de fibres courtes de renfort imprégnées de résine à remplir un moule par une compression sous de hautes pressions. Ces procédés sont très largement utilisés en raison de leur aptitude à la fabrication de pièces de formes complexes et de leur grande productivité.

La préparation de la pâte destinée à être moulée est une étape clé du procédé de fabrication par moulage par compression.

Un premier procédé consiste à réaliser une enduction fil à fil d'un roving de renfort par une résine stabilisée dans un état intermédiaire. Cette résine est, soit en solution dans un solvant (imprégnation "solvant"), soit à l'état fondu (imprégnation "hot melt"). Le roving imprégné est alors coupé en fibres courtes et stocké avant d'être moulé par compression. Mais, ce procédé n'est pas applicable à de grandes séries et peut poser des problèmes d'hygiène industrielle.

Dans un second procédé, on mélange le renfort et la résine dans un malaxeur donnant une pâte prête à être moulée (technique "bulk moulding compound" ou "BMC"). Mais, la qualité d'imprégnation est difficile à maîtriser et les fibres de renfort sont souvent brisées lors du malaxage ce qui entraîne des propriétés mécaniques non toujours constantes. Enfin, les taux volumiques de fibres ("TVF") atteints sont faibles (environ 30 %) ce qui ne permet pas la réalisation de pièces de structure.

Un troisième procédé consiste à déposer des fibres coupées en continu sur un film support, de leur ajouter de la résine, de calandrer l'ensemble entre deux films plastiques et de le stocker pour atteindre la viscosité souhaitée. Les plaques obtenues sont alors découpées et empilées avant d'être moulées par compression (technique "sheet moulding compound" ou "SMC"). Avec ce procédé, de nouveau, la qualité d'imprégnation n'est pas optimale et les plaques empilées n'ont pas la densité théorique du produit fini, ce qui nécessite une évacuation d'air importante lors du moulage. De plus, la disposition en feuilles induit des problèmes de rhéologie lors du moulage par compression.

Une autre technique de fabrication de pièces composites consiste à disposer des fibres de renfort dans un moule (réalisation d'une "préforme" de la pièce constituée uniquement de fibres de renfort avec si nécessaire un liant pour en assurer le maintien), puis à injecter dans ce moule sous vide ou à basse pression une résine liquide pour imprégner les fibres de renfort. La polymérisation de la résine démarre ensuite dans le moule et est suivie ou non, après démoulage de la pièce, d'une post-cuisson pour obtenir des propriétés mécaniques optimales (procédé "resin transfer moulding" ou "RTM"). On appelle "moule de transfert" un tel moule permettant une injection de résine sous vide ou à basse pression. Le document DE-B-12 35 561 décrit un tel procédé de fabrication de pièces composites

Ce procédé permet d'obtenir des pièces composites possédant d'excellentes propriétés mécaniques grâce, en particulier, à la bonne imprégnation des fibres de renfort par la résine liquide. En revanche, ce procédé n'est pas bien adapté à la fabrication de pièces composites de formes complexes en raison de la difficulté à prédisposer de façon satisfaisante et rapide les fibres de renfort dans le moule de transfert.

Au regard de ces techniques antérieures, l'invention vise à améliorer les procédés de réalisation de pièces composites de formes complexes, notamment dans le cas de pièces de structure.

Le nouveau procédé de fabrication de pièces composites, selon l'invention, comprend les étapes suivantes :
- on met dans un moule de transfert des fibres courtes de renfort ;
- on infiltre les fibres courtes de renfort par injection sous vide ou à basse pression d'une résine liquide ;
- on maintient lesdites fibres courtes de renfort infiltrées par ladite résine dans ledit moule, à une température dite température de gélification, jusqu'à obtenir une préforme pâteuse dont la viscosité est appropriée à un moulage par compression ;
- on démoule la préforme pâteuse ;
- on met en place ladite préforme pâteuse dans un moule de compression porté à une température de compression supérieure à la température de gélification ;
- on effectue le moulage par compression de la préforme pâteuse ;
- on fait polymériser la préforme pâteuse à au moins une température supérieure ou égale à ladite température de compression.

Des modes de réalisation préférés sont decrits dans les revendications dépendantes.

Ce procédé a l'avantage, par rapport aux procédés classiques de préparation de la pâte destinée à être moulée, d'assurer une excellente imprégnation des fibres de renfort par la résine liquide tout en assurant un moulage correct de toutes les parties de la pièce composite réalisée.

D'autre part, les taux volumiques de fibres obtenus par ce procédé peuvent être très élevés, jusqu'à 50 %, ce qui donne la possibilité de réaliser par cette technique des pièces de structure.

Avantageusement, lors de l'injection de la résine, le moule de transfert est fermé à la cote correspondant à la densité théorique du produit fini, c'est-à-dire au volume du produit fini corrigé de la variation de densité qui se produit au cours de la polymérisation. Cela supprime les problèmes liés à l'évacuation de l'air lors du moulage par compression.

Un exemple de mise en oeuvre du procédé selon l'invention va maintenant être décrit à l'aide des figures annexées suivantes :
- la figure 1 est un schéma illustrant la coupe et la répartition des fibres de verre dans un moule de transfert;
- la figure 2 présente la phase de compactage des fibres et d'injection de la résine;
- la figure 3 illustre la phase de gélification de la résine dans le moule de transfert;
- la figure 4 présente le démoulage de la préforme pâteuse et le chargement du moule de compression;
- la figure 5 est un schéma illustrant les phases de moulage et de polymérisation;
- la figure 6 présente l'évolution de la viscosité en fonction du temps à 50°C d'une résine;
- la figure 7 donne l'évolution de la pénétrabilité en fonction du temps à 50°C de la même résine.

Toutes les fibres de renfort usuelles peuvent être utilisées, notamment les fibres de verre, de carbone, de bore, d'aramide. Dans l'exemple présenté, on utilise des fibres de verre.

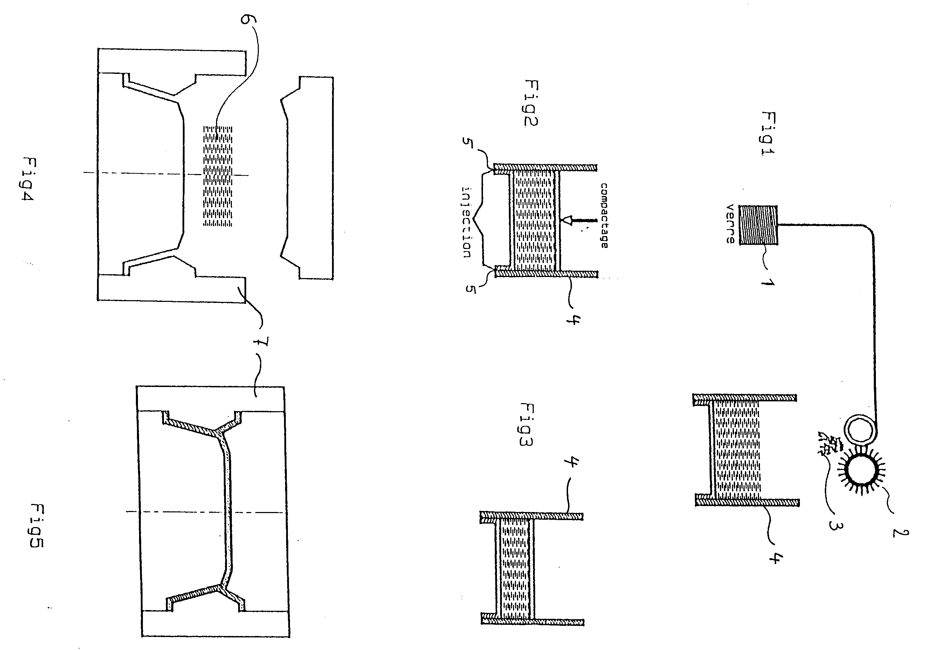

La première phase du procédé de fabrication de pièces composites selon l'invention consiste à mettre en place le renfort dans un moule simple de transfert 4. On peut utiliser des fibres, pré-coupées ou non, ou des mats. La figure 1 présente, de façon schématique, le cas de l'utilisation d'un roving 1. Un roving de fibres de verre sèches est coupé en fibres courtes 3 d'une longueur d'environ 25 à 50 mm avec un couteau rotatif 2 au-dessus d'un moule simple de transfert 4, par exemple de forme cylindrique. Si nécessaire, un dispositif (non représenté) modifie les positions relatives du couteau 2 et du moule de transfert 4 pour assurer un remplissage homogène du moule de transfert par les fibres coupées.

Lorsque le moule de transfert 4 est rempli de fibres coupées, il est porté à une température Θₘ appropriée pour l'injection de la résine. De préférence, la fermeture du moule de transfert 4 se fait à la cote correspondant à la densité théorique du produit fini ce qui entraîne un compactage des fibres 3 (figure 2). On entend par "cote correspondant à la densité théorique du produit fini", la cote correspondant au volume du produit fini, corrigé de la variation de densité qui se produit au cours de la polymérisation.

On injecte ensuite la résine par les canaux 5. La résine choisie a, de préférence, une viscosité inférieure ou égale à 100 centipoises (0,1 Pa.s). On maintient l'ensemble après la fin de l'injection dans le moule de transfert 4 pendant un temps Tₘ tel que la résine se gélifie jusqu'à ce que sa viscosité devienne appropriée pour un moulage par compression. On détermine expérimentalement cette viscosité au moyen d'un pénétromètre à aiguilles (Norme ASTM D5 : A87 073.10 et A87 081.00). La pénétration de l'aiguille dans la résine pure, mesurée à cette température Θₘ, est, de préférence, comprise entre 105 et 175 dixièmes de millimètres. Ces mesures de pénétrabilité sont effectuées sur la "résine pure", c'est-à-dire en l'absence de toute fibre de renfort.

A l'issue du temps Tₘ on démoule la préforme pâteuse 6 obtenue et on la transfère dans un moule de compression 7 porté à une température Θ_{c} appropriée au moulage et au démarrage de la réaction de polymérisation de la résine (figure 4).

On effectue le moulage de la préforme pâteuse 6 dans le moule de compression 7 (figure 5). A l'issue du moulage, la polymérisation de la résine est réalisée à une ou plusieurs températures, dans le moule de compression 7 et dans une étuve de post-cuisson après démoulage si nécessaire.

On peut utiliser une résine qui, à la température Θₘ, a une viscosité suffisamment basse pour être injectée sous vide ou à basse pression dans un moule de transfert 4, puis se gélifie progressivement jusqu'à ce que sa viscosité atteigne une valeur appropriée pour un moulage par compression et qui à une température Θ_{c} supérieure à Θₘ démarre sa réaction de polymérisation.

Une telle résine comprend une résine de base thermodurcissable et au moins un agent de gélification et/ou de polymérisation.

De préférence, la résine de base est choisie dans le groupe des résines époxyde, vinylester, polyester, bismaleimide, polyuréthanne, polyurée, phénolique.

Un agent de gélification peut être un isocyanate dans la proportion de 10 à 40 parties, préférentiellement de 25 à 35 parties, pour 100 parties de résine de base.

L'agent de polymérisation peut être un peroxyde dans la proportion de 0,2 à 2,0 parties, préférentiellement de 0,4 à 1,0 parties, pour 100 parties de résine de base.

Un exemple d'une telle résine a la formulation suivante:

| | |
|---|---|
| - Résine vinylester à base phénolique (Derakane 470/36 (Dow Chemicals)) | 100 parties, |
| - Isocyanate MDI (Isonate M143) | 32 parties, |
| - Peroxyde (PerBenzoate de Tertio Butyl) | 0,5 parties, |

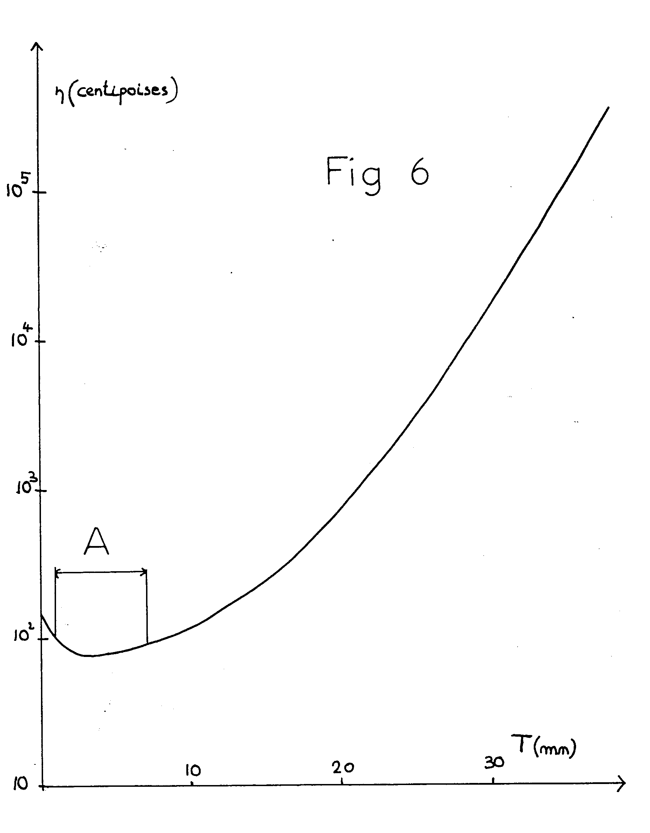

L'évolution de la viscosité η (en centipoises) de cette résine en fonction du temps T (en minutes) à 50°C est présentée à la figure 6. Entre 2 et 7 minutes - zone A sur la figure 6 - après avoir été portée à 50°C, la viscosité de cette résine est inférieure ou égale à 100 centipoises (0,1 Pa.s) ce qui est tout à fait satisfaisant pour une bonne injection dans un moule de transfert 4. Au-delà de 7 minutes, sous l'action de l'isocyanate, la viscosité augmente continûmentjusqu'à dépasser 105 centipoises (0,105 Pa.s).

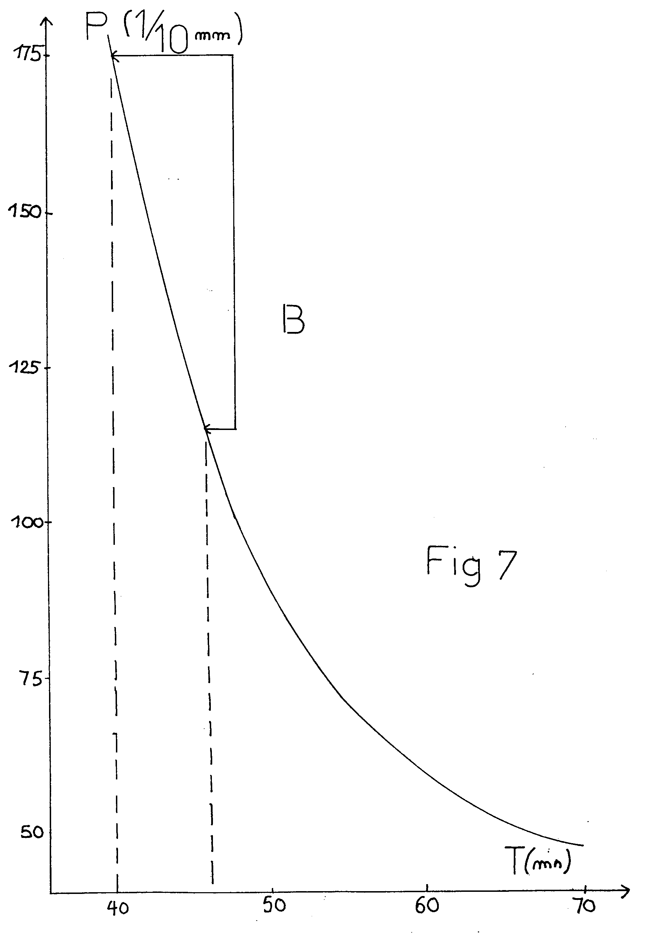

Pour pouvoir déterminer le moment où la viscosité est appropriée au moulage par compression, on utilise expérimentalement un pénétromètre à aiguille (Norme ASTM D5 : A87 073.10 et A87 081.00). La figure 7 présente l'évolution en fonction du temps T (en minutes) toujours à 50°C de la pénétration P (en dixièmes de millimètres) de l'aiguille du pénétromètre dans la résine pure. On a déterminé expérimentalement que le moulage par compression était satisfaisant pour des valeurs de pénétration comprises entre 105 et 175 dixièmes de millimètres. Cela permet de définir le temps de séjour de la résine dans le moule de transfert - zone B sur la figure 7-, entre 40 et 46 minutes.

Les fibres de renfort imprégnées de résine sont ensuite moulées dans le moule de compression 7 porté à 115°C. La polymérisation liée à l'action du PerBenzoate de Tertio Butyl démarre. Au bout de 20 minutes à cette température de 115°C, il est possible de démouler la pièce. Une post-cuisson en étuve de 4 heures à 150°C et 1 heure à 200°C est ensuite souhaitable pour achever la polymérisation et la réticulation de la résine.

Bien entendu, la résine peut aussi comporter un certain nombre d'adjuvants, participant ou non aux réactions de gélification et de polymérisation, tels que, résines thermoplastiques, tensioactifs, plastifiants, anti-retrait, démoulant interne, agents de protection, colorants...

Ce procédé de fabrication de pièces composites par moulage par compression permet d'atteindre des taux volumiques de fibres très élevés, jusqu'à 50 %, ce qui donne la possibilité de réaliser par cette technique des pièces de structure. En particulier, ce procédé est bien adapté à la réalisation d'éléments de roues en matériau composite pour véhicules.

## Revendications

1. Procédé de fabrication de pièces composites selon lequel :
- on met dans un moule de transfert (4) des fibres courtes de renfort (3) ;
- on infiltre les fibres courtes de renfort (2) avec une résine à basse viscosité ;
- on maintient les fibres courtes de renfort infiltrées par ladite résine dans ce moule (4), à une température dite température de gélification, jusqu'à obtenir une préforme pâteuse (6) dont la viscosité est appropriée à un moulage par compression ;
- on démoule la préforme pâteuse (6) ;
- on met en place ladite préforme pâteuse (6) dans un moule de compression (7) porté à une température de compression supérieure à la température de gélification ;
- on effectue le moulage par compression de la préforme pâteuse (6) ;
- on fait polymériser la préforme pâteuse (6) à au moins une température supérieure ou égale à ladite température de compression.

2. Procédé de fabrication de pièces composites selon la revendication 1 caractérisé en ce que, lors de l'infiltration de la résine, le moule de transfert (4), rempli de fibres courtes de renfort (3), est fermé à la cote correspondant à la densité théorique du produit fini.

3. Procédé de fabrication de pièces composites selon l'une des revendications 1 et 2 caractérisé en ce que, lors de l'infiltration des fibres courtes de renfort (3), la viscosité de la résine est inférieure ou égale à 100 centipoises.

4. Procédé de fabrication de pièces composites selon l'une des revendications 1 à 3 caractérisé en ce que, à l'issue du séjour dans le moule de transfert (4), la préforme pâteuse (6) obtenue a une viscosité telle que la pénétration d'une aiguille de pénétromètre dans la résine pure est comprise entre 105 et 175 dixièmes de millimètres.

5. Procédé de fabrication de pièces composites selon l'une des revendications 1 à 4 caractérisé en ce que la réaction de polymérisation est poursuivie en dehors du moule de compression (7).

## Claims

1. A process for production of composite parts in which:
- short reinforcing fibres (3) are placed in a transfer mould (4);
- the short reinforcing fibres (2) are infiltrated by a low-viscosity resin;
- the short reinforcing fibres infiltrated by said resin are kept in this mould (4), at a temperature known as the gelation temperature, until a pasty preform (6) is obtained, the viscosity of which is suitable for compression moulding;
- the pasty preform (6) is demoulded;
- said pasty preform (6) is positioned in a compression mould (7) brought to a compression temperature greater than the gelation temperature;
- the pasty preform (6) is compression-moulded;
- the pasty preform (6) is polymerised at at least one temperature higher than or equal to said compression temperature.

2. A process for production of composite parts according to claim 1, characterised in that upon the infiltration of the resin the transfer mould (4), filled with short reinforcing fibres (3), is closed at a height corresponding to the theoretical density of the finished product.

3. A process for production of composite parts according to one of claims 1 and 2, characterised in that, upon the infiltration of the short reinforcing fibres (3), the viscosity of the resin is less than or equal to 100 centipoise.

4. A process for production of composite parts according to one of claims 1 to 3, characterised in that, at the end of the stay in the transfer mould (4), the pasty preform (6) obtained has a viscosity such that the penetration of a penetrometer needle into the pure resin is between 105 and 175 tenths of a millimetre.

5. A process for production of composite parts according to one of claims 1 to 4, characterised in that the polymerisation reaction is continued outside the compression mould (7).

## Patentansprüche

1. Verfahren zur Herstellung von Verbundstoffteilen, das folgende Schritte umfaßt:
- Einbringen kurzer verstärkender Fasern (3) in ein Transferpreßwerkzeug (4);
- Tränken der kurzen verstärkenden Fasern (3) mit einem Harz mit niederer Viskosität;
- Halten der mit dem Harz getränkten kurzen verstärkenden Fasern im Transferpreßwerkzeug (4) auf einer als Gelbildungstemperatur bezeichneten Temperatur bis zum Erhalt eines pastosen Vorformlings (6), dessen Viskosität für ein Formpressen geeignet ist;
- Entformen des pastosen Vorformlings (6);
- Einsetzen des pastosen Vorformlings (6) in ein Preßwerkzeug (7), das auf einer oberhalb der Gelbildungstemperatur liegenden Formpreßtemperatur gehalten ist;
- Formpressen des pastosen Vorformlings (6);
- Polymerisation des pastosen Vorformlings (6) bei mindestens einer Temperatur, die größer als die Formpreßtemperatur oder gleich der Formpreßtemperatur ist.

2. Verfahren zur Herstellung von Verbundstoffteilen nach Anspruch 1, dadurch gekennzeichnet, daß das mit kurzen verstärkenden Fasern (3) gefüllte Transferpreßwerkzeug (4) beim Tränken mit dem Harz bei dem der theoretischen Dichte des fertigen Produkts entsprechenden Füllungsgrad geschlossen wird.

3. Verfahren zur Herstellung von Verbundstoffteilen nach Anspruch 1 oder 2, dadurch gekennzeichnet, daß die Viskosität beim Tränken der kurzen verstärkenden Fasern (3) kleiner als oder gleich 100 cP ist.

4. Verfahren zur Herstellung von Verbundstoffteilen nach einem der Ansprüche 1 bis 3, dadurch gekennzeichnet, daß der am Ende der Verweilzeit im Transferpreßwerkzeug (4) erhaltene pastose Vorformling (6) eine solche Viskosität aufweist, daß die Eindringtiefe einer Penetrometernadel in das reine Harz 105 bis 175 Zehntelmillimeter beträgt.

5. Verfahren zur Herstellung von Verbundstoffteilen nach einem der Ansprüche 1 bis 4, dadurch gekennzeichnet, daß die Polymerisationsreaktion außerhalb des Preßwerkzeugs (7) verfolgt wird.
